# EUROPEAN PATENT SPECIFICATION

(11) **EP 3 664 480 B1**
(45) Date of publication and mention of the grant of the patent: **24.05.2023**
(21) Application number: 19181782.4
(22) Date of filing: 21.06.2019
(51) Int. Cl.: H04W 4/029, H04W 4/40, G06Q 10/02, G06Q 10/06, G06Q 30/06, G01S 19/42, G06Q 50/30, G08G 1/00, H04B 17/27, G01S 19/14, H04B 17/318, G08G 1/01, G06Q 20/14, G01S 5/00, G06Q 20/32, G07F 17/00, H04L 67/12

(54) **METHOD FOR ACQUIRING INFORMATION AND ELECTRIC SCOOTER**
VERFAHREN ZUR ERFASSUNG VON INFORMATIONEN UND ELEKTRISCHER SCOOTER
PROCÉDÉ D'ACQUISITION D'INFORMATIONS ET SCOOTER ÉLECTRIQUE

(30) Priority: 07.12.2018 CN 201811497129
(43) Date of publication of application: 10.06.2020
(73) Proprietor: NINEBOT (BEIJING) TECH. CO., LTD., Beijing 100192 (CN)
(72) Inventor: DENG, Shen, Beijing, Beijing 100192 (CN); YUAN, Yubin, Beijing, Beijing 100192 (CN); XI, Weining, Beijing, Beijing 100192 (CN); CHEN, Zichong, Beijing, Beijing 100192 (CN); CHEN, Zhongyuan, Beijing, Beijing 100192 (CN)
(74) Representative: Crippa, Paolo Ernesto

(56) References cited:
- EP-A1- 2 943 001
- EP-A2- 2 434 658
- CN-A- 107 948 933
- US-A1- 2011 193 721
- US-A1- 2015 281 906

## Description

### Technical Field

The present disclosure relates to the field of communications, and in particular to a method for acquiring information and an electric scooter.

### Background

At present, for the convenience of users, the constraint on the parking point of the shared electric scooter is loose, which causes the user to park the electric scooter in a place where there is no signal or weak signal with high probability, therefore, the user or other user cannot find the electric scooter parked in a place with no signal or with weak signal in a target application corresponding to the electric scooter.

It can be seen that there is a problem in the related art that the electric scooter is improperly parked due to the loose constraint on the parking point of the electric scooter.

US2011/193721, EP2943001, EP2434658, and CN107948933 provide respective technical solutions; however, the above mentioned problem still remains unsolved.

### Summary

The invention is defined by independent claims 1, 7, 12 and 13.

The embodiments of the present disclosure provide a method for acquiring information and an electric scooter, which can at least solve the problem that the electric scooter is improperly parked due to the loose constraint on the parking point of the electric scooter in the related art.

According to one embodiment of the present disclosure, a method for acquiring information is provided, which comprises: acquiring position information and signal strength information of a target position on a moving path of an electric scooter unlocked by a target account, wherein the signal strength information is used for indicating a signal strength of a wireless signal at the target position; establishing a corresponding relationship between the position information and the signal strength information; sending the corresponding relationship to a target client logged in by using the target account to display the location information and the signal strength information on the target client.

Optionally, acquiring the position information and the signal strength information of the target position on the moving path of the electric scooter unlocked by the target account comprises: acquiring the position information by using a global positioning service (abbreviated as GPS) system installed on the electric scooter; and, detecting the signal strength information by using a first wireless communication device mounted on the electric scooter.

Optionally, acquiring the position information and the signal strength information of the target position on the moving path of the electric scooter unlocked by the target account comprises: receiving the position information and the signal strength information of the electric scooter from an electric scooter other than the electric scooter by using a second wireless communication device mounted on the electric scooter.

Optionally, after establishing the corresponding relationship between the position information and the signal strength information, the method further comprises: saving the established corresponding relationship to the electric scooter.

Optionally, sending the corresponding relationship to the target client logged in by using the target account comprises: sending the corresponding relationship to the target client logged in by using the target account via a target server.

Optionally, after sending the corresponding relationship to the target client logged in by using the target account, the method further comprises: detecting a target operation performed on the electric scooter, wherein the target operation is used for locking the electric scooter; and, in a case that signal strength of the wireless signal at a first position where the electric scooter is located is less than a target threshold, sending out prompt information through the electric scooter before locking the electric scooter in response to the target operation, wherein the prompt information is used for prompting that the signal strength of the wireless signal at the first position is less than the target threshold.

According to the invention, sending the corresponding relationship to the target client logged in by using the target account, the method further comprises: detecting that signal strength of the wireless signal at a second position where the electric scooter is located is less than a target threshold after ending use of the electric scooter through the target account; determining a third position on the movement path according to the established corresponding relationship, wherein signal strength of the wireless signal at the third position is greater than or equal to the target threshold; and, controlling the electric scooter to move from the second position to the third position by a motor of the electric scooter.

According to another embodiment of the present disclosure, there is provided an electric scooter, there is provided a scooter scheduling apparatus, which may include a memory and a processor; the memory stores a computer program; and the computer program is configured to execute the following program modules when being executed by the processor: an acquiring module, configured to acquire position information and signal strength information of a target position on a moving path of an electric scooter unlocked by a target account, wherein the signal strength information is used for indicating a signal strength of a wireless signal at the target position; an establishing module, configured to establish a corresponding relationship between the position information and the signal strength information; and, a sending module, configured to send the corresponding relationship to a target client logged in by using the target account to display the location information and the signal strength information on the target client.

Optionally, the acquiring module comprises: an acquiring unit, configured to acquire the position information by using a GPS system installed on the electric scooter; and, a detecting unit, configured to detect the signal strength information by using a first wireless communication device mounted on the electric scooter.

Optionally, the acquiring module comprises: a receiving unit, configured to receive the position information and the signal strength information of the electric scooter from an electric scooter other than the electric scooter by using a second wireless communication device mounted on the electric scooter.

Optionally, the electric scooter is further configured to, after establishing the corresponding relationship between the position information and the signal strength information, save the established corresponding relationship to the electric scooter.

Optionally, the electric scooter further comprises: a first detecting module, configured to detect a target operation performed on the electric scooter after sending the corresponding relationship to the target client logged in by using the target account, wherein the target operation is used for locking the electric scooter; and, a prompting module, configured to, in a case that signal strength of the wireless signal at a first position where the electric scooter is located is less than a target threshold, send out prompt information through the electric scooter before locking the electric scooter in response to the target operation, wherein the prompt information is used for prompting that the signal strength of the wireless signal at the first position is less than the target threshold.

According to the invention, the electric scooter further comprises: a second detecting module, configured to, after sending the corresponding relationship to the target client logged in by using the target account, detect that signal strength of the wireless signal at a second position where the electric scooter is located is less than a target threshold after ending use of the electric scooter through the target account; a determining module, configured to determine a third position on the movement path according to the established corresponding relationship, wherein signal strength of the wireless signal at the third position is greater than or equal to the target threshold; and, a control module, configured to control the electric scooter to move from the second position to the third position by a motor of the electric scooter.

According to another embodiment of the present disclosure, there is further provided a storage medium; the storage medium stores a computer program; and the computer program is configured to execute the steps of the above-mentioned method embodiment in running.

According to another embodiment of the present disclosure, there is further provided an electronic apparatus, which includes a memory and a processor; the memory stores a computer program; and the processor is configured to run the computer program to execute the steps of the above-mentioned method embodiment.

With the present disclosure, position information and signal strength information of a target position on a moving path of an electric scooter unlocked by a target account are acquired, wherein the signal strength information is used for indicating a signal strength of a wireless signal at the target position; a corresponding relationship between the position information and the signal strength information is established; and, the corresponding relationship is sent to a target client logged in by using the target account to display the location information and the signal strength information on the target client, since the corresponding relationship between the position information and the signal strength information through the electric scooter is acquired, the position information and the signal strength information are displayed on the associated target client based on the correspondence relationship, thereby letting the user know the region with strong signal along the way (moving path) conveniently, and providing basis for the user to select a parking point of the electric scooter. The present disclosure solves the problem in related art that the electric scooter is improperly parked due to the loose constraint on the parking point of the electric scooter, and achieves the effect of improving the parking effectiveness of the electric scooter.

### Brief Description of the Drawings

The accompanying drawings are described here to provide a further understanding of the present disclosure. The schematic embodiments and description of the present disclosure are adopted to explain the present disclosure, and do not form improper limits to the present disclosure. In the drawings:
Fig. 1 illustrates a flowchart of a method for acquiring information according to an embodiment of the present disclosure;
Fig. 2 illustrates a structural block diagram of an electric scooter according to an embodiment of the present disclosure;
Fig. 3 illustrates anther structural block diagram of an electric scooter according to an embodiment of the present disclosure; and,
Fig. 4 illustrates anther structural block diagram of an electric scooter according to an embodiment of the present disclosure.

### Detailed Description of the Embodiments

The present disclosure is described below with reference to the drawings and embodiments in detail. It should be noted that the embodiments of the present application and the characteristics of the embodiments may be combined with each other in a case where there is no conflict.

It is to be noted that, terminologies such as "first" and "second" in the specification, claims and accompanying drawings of the present disclosure are only used to distinguish similar objects, rather than to describe a special order or a precedence order.

### Embodiment 1

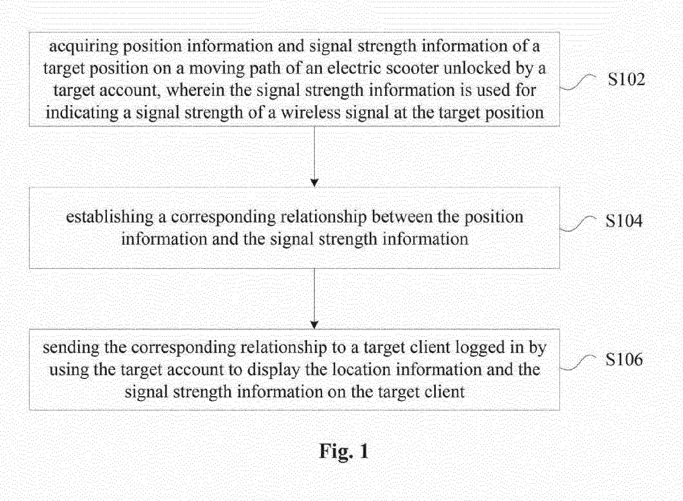

In the present embodiment, a method for acquiring information running on an electric scooter is provided. Fig. 1 illustrates a flowchart of a method for acquiring information according to an embodiment of the present disclosure. As illustrated in Fig.1, the process includes the following steps:
At step S102, position information and signal strength information of a target position on a moving path of an electric scooter unlocked by a target account are acquired, wherein the signal strength information is used for indicating a signal strength of a wireless signal at the target position;
At step S104, a corresponding relationship between the position information and the signal strength information is established.
At step S106, the corresponding relationship is sent to a target client logged in by using the target account to display the location information and the signal strength information on the target client.

Through the above steps, when detecting that the signal strength of the first wireless communication device on the electric scooter is lower than a target threshold, position information and signal strength information of a target position on a moving path of an electric scooter unlocked by a target account are acquired, wherein the signal strength information is used for indicating a signal strength of a wireless signal at the target position; a corresponding relationship between position information and signal strength information is established; and, the corresponding relationship is sent to the target client logged in by using the target account to display the location information and the signal strength information on the target client, thereby solving the problem in the related art that the electric scooter is improperly parked due to the loose constraint on the parking point of the electric scooter, and improving the parking effectiveness of the electric scooter.

Optionally,, the executive subject of the above steps may be an electric scooter or the like, but is not limited thereto.

The electric scooter may include a plurality of different components, and may include, but is not limited to, at least one of the followings: a handlebar, a handlebar stem, a vehicle underframe, wheels (at least two), a connecting device, and the like.
at step S102, the electric scooter acquires position information and signal strength information of a target position on a moving path of an electric scooter unlocked by a target account, wherein the signal strength information is used for indicating a signal strength of a wireless signal at the target position.

Before acquiring the position information and the signal strength information, the user may unlock the electric scooter by using the target count firstly. For example, by scanning a graphical code (e.g., a two-dimensional code) on the electric scooter using a target application client (matching the electric scooter) logged in by using a target account on a mobile phone, the electric scooter is unlocked by using the target account through interaction between the target application client, a corresponding server of the electric scooter, and the electric scooter.

A location recording module may be added to the electric scooter. In the process of using the electric scooter after successfully unlocked (when the electric scooter is traveling), the electric scooter may record road section (or, road sections) with signal and road section (or, road sections) without signal in the route in real time.

The electric scooter can perform an acquisition operation to obtain position information and signal strength information of the current position by periodically triggering or event triggering. The location information may be acquired by a GPS system, and the signal strength of the above wireless signal may be acquired by a wireless communication device.

As an optional implementation, the position information and the signal strength information may be detected by components mounted (or, installed) on the present electric scooter: acquiring the position information through a GPS system which is installed on the electric scooter; the signal strength information is detected by a first wireless communication device mounted on the electric scooter.

A first wireless communication device may be mounted on the electric scooter. The first wireless communication device can communicate with a target server (e.g., a central server) corresponding to the electric scooter through a first wireless network (e.g., a 4G network), and can detect a signal strength of network signal of the first wireless network.

As another optional implementation, the position information and the signal strength information may be detected by components mounted (or, installed) on other electric scooters and sent to the electric scooter by other electric scooters: the position information and the signal strength information of the target position are received from another electric scooter other than the electric scooter by a second wireless communication device mounted on the electric scooter.

A second wireless communication device may be mounted on the electric scooter. The second wireless communication device can communicate with other scooters through a second wireless network and can detect signal strength of a network signal of the second wireless network. The second wireless communication component may be a Wireless Fidelity (abbreviated as WIFI) or a 5th Generation mobile communication technology (abbreviated as 5G) module.

The first wireless communication device and the second wireless communication device may be the same communication device (for example, interaction between electric scooters and interaction between electric scooters and servers use the same network, and multiple network interaction functions are integrated on one wireless communication device), or different communication devices (for example, interaction between electric scooters and interaction between electric scooters and servers use difference networks).

Through the above technical solutions of the embodiments of the present disclosure, the location information and the signal strength information are acquired by multiple manners, which can improve the flexibility of information acquisition and improve the efficiency of information acquisition.

At step S104, the electric scooter establishes a corresponding relationship between the position information and the signal strength information.

After acquiring the position information and the signal strength information of the target position, a corresponding relationship between the two can be established, so as to display the position information and the signal strength information on the target client. The established corresponding relationship may be stored on the electric scooter, for example, in a memory of the electric scooter.

In step S106, the electric scooter send the corresponding relationship to a target client logged in by using the target account to display the location information and the signal strength information on the target client.

The corresponding relationship can be sent by the electric scooter to the target client (the electric scooter and the target client can transmit information directly) directly, or can be sent by the electric scooter to the target client via a server (a target server).

The electric scooter may send the corresponding relationship to the server, and the server stores the corresponding relationship. After the target client sends a request message for obtaining the corresponding relationship to the target server, the electric scooter sends the corresponding relationship to the target server.

In addition to the corresponding relationship reported by the electric scooter, the server may store corresponding relationships between position information and signal strength information reported by other electric scooters. Since the moving paths of different electric scooters and the moving paths of the same electric scooter at different times can be different, signal distribution in a target statistical area can be calculated by the corresponding relationships reported by a plurality of electric scooters, and the signal weakness of the urban area can be found and statistic, and thereby helping plan urban signal distribution.

In the embodiment of the present disclosure, after sending the corresponding relationship to the target client logged in by using the target account, a target operation performed on the electric scooter is detected, wherein the target operation is used for locking the electric scooter; in a case that signal strength of the wireless signal at a first position where the electric scooter is located is less than a target threshold, prompt information is sent out through the electric scooter before locking the electric scooter in response to the target operation, wherein the prompt information is used for prompting that the signal strength of the wireless signal at the first position is less than the target threshold.

For example, after the user ends riding the electric scooter, when the electric scooter is going to be locked, the electric scooter sends alarm for no signal. The user opens the APP to view areas with/without signal recorded along the way by the electric scooter, and selects a closest area with signal to perform a parking operation and a locking operation. By means of recording areas with/without signal along the way, the user is indicated with an area with strong signal, which facilitates the user to place the electric scooter in an area with signal.

Through the above technical solutions of the embodiments of the present disclosure, when it is detected that the lock operation is executed on the electric scooter, if the signal strength of the current parking position is weak, the prompt information is sent through the electric scooter to facilitate the user to know the signal condition of the current position, and the probability that the user parks the electric scooter in a place with no signal or with weak signal is reduced.

In the embodiment of the present disclosure, after sending the corresponding relationship to the target client logged in by using the target account, the electric scooter detects that signal strength of the wireless signal at a second position where the electric scooter is located is less than a target threshold after ending use of the electric scooter through the target account; the electric scooter determines a third position on the movement path according to the established corresponding relationship, wherein signal strength of the wireless signal at the third position is greater than or equal to the target threshold; and, the electric scooter controls the electric scooter to move from the second position to the third position by a motor of the electric scooter.

The electric scooter may store the corresponding relationship. After ending using of the electric scooter through the target account, the electric scooter is in an unused state. If it is detected that the signal strength at the current position is less than the target threshold, the electric scooter may select a position with high signal strength from the moving path and control the electric scooter to move from the current position to the selected position.

According to the above technical solutions of the embodiments of the present disclosure, the electric scooter is automatically moved to a position where the signal strength is high when the electric scooter is not used, thereby facilitating the acquisition of the position information of the electric scooter.

Through the above description of the embodiment, those skilled in the art may clearly understand that the method according to the above embodiment may be implemented through software in connection with a necessary general hardware platform, or may be implemented by hardware. However, in many cases, the former is a better implementation. Based on this understanding, the technical solution of the embodiment of the present disclosure in essence or the part contributing to the prior art may be embodied in the form of a software product. The computer software product is stored in a storage medium (such as a ROM/RAM, a magnetic disc, an optical disc), including several instructions which may cause a terminal device (such as a mobile phone, a computer, a server, or a network device and the like) to execute the method according to the embodiments of the present disclosure.

### Embodiment 2

The embodiments further provide an electric scooter, and the electric scooter is configured to implement the above embodiments and preferred implementation manners and the parts that have been described will no longer be repeated. As used herein, the term "module" is a combination of software and/or hardware capable of implementing a predetermined function. Although the apparatus described in the following embodiment is preferably implemented by software, it may also be conceivable to implement by hardware or a combination of the software and the hardware

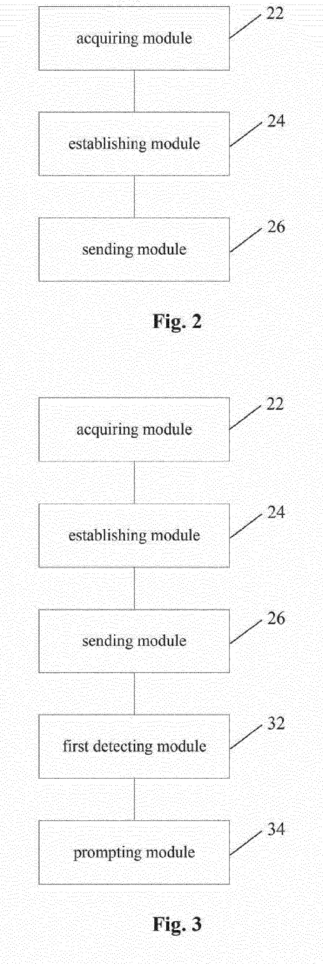

Fig. 2 illustrates a structural block diagram of an electric scooter according to an embodiment of the present disclosure. As illustrated in Fig. 3, the electric scooter comprises:
an acquiring module 22, configured to acquire position information and signal strength information of a target position on a moving path of an electric scooter unlocked by a target account, wherein the signal strength information is used for indicating a signal strength of a wireless signal at the target position;
an establishing module 24, connected to the acquiring module 22 and configured to establish a corresponding relationship between the position information and the signal strength information;
a sending module 26, configured to send the corresponding relationship to a target client logged in by using the target account to display the location information and the signal strength information on the target client.

Optionally, the acquiring module 22 may comprise: a acquiring unit, configured to acquire the position information by using a GPS system installed on the electric scooter; a detecting unit, configured to detect the signal strength information by using a first wireless communication device mounted on the electric scooter.

Optionally, acquiring module 22 may comprise: a receiving unit, configured to receive the position information and the signal strength information of the electric scooter from an electric scooter other than the electric scooter by using a second wireless communication device mounted on the electric scooter.

Fig. 3 illustrates anther structural block diagram of an electric scooter according to an embodiment of the present disclosure. As illustrated in Fig. 3, besides all modules illustrated in Fig. 2, the electric scooter further comprises:
a first detecting module 32, configured to detect a target operation performed on the electric scooter after sending the corresponding relationship to the target client logged in by using the target account, wherein the target operation is used for locking the electric scooter;
a prompting module 34, connected to the first detecting module 32 and configured to, in a case that signal strength of the wireless signal at a first position where the electric scooter is located is less than a target threshold, send out prompt information through the electric scooter before locking the electric scooter in response to the target operation, wherein the prompt information is used for prompting that the signal strength of the wireless signal at the first position is less than the target threshold.

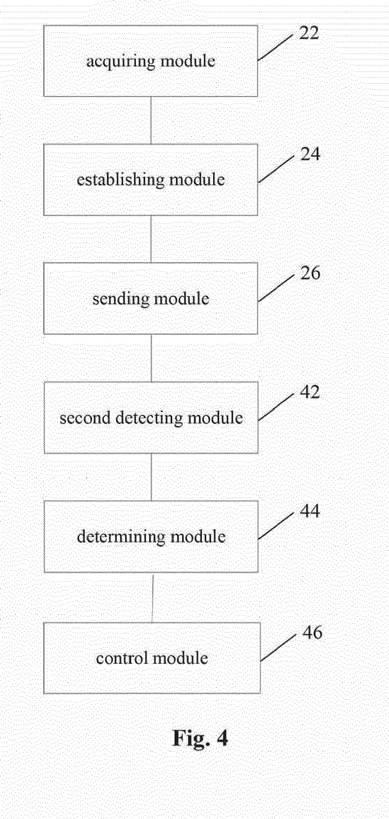

Fig. 4 illustrates anther structural block diagram of an electric scooter according to an embodiment of the present disclosure. As illustrated in Fig. 4, besides all modules illustrated in Fig. 2, the electric scooter further comprises:
a second detecting module 42, connected to the sending module 26 and configured to, after sending the corresponding relationship to the target client logged in by using the target account, detect that signal strength of the wireless signal at a second position where the electric scooter is located is less than a target threshold after ending use of the electric scooter through the target account;
a determining module 44, connected to the second detecting module 42 and configured to determine a third position on the movement path according to the established corresponding relationship, wherein signal strength of the wireless signal at the third position is greater than or equal to the target threshold;
a control module 46, connected to the determining module 44 and configured to control the electric scooter to move from the second position to the third position by a motor of the electric scooter.

It is to be noted that the above modules may be implemented via software or hardware, and for the latter, it may be implemented but not limited to the following manners: the above modules are located in a same processor; or the above modules are respectively located in different processors in any combined form.

### Embodiment 3

The embodiment of the present disclosure further provides a storage medium; the storage medium stores a computer program, and the computer program is configured to execute the steps of the above-mentioned any method embodiment in running.

In the present embodiment, the storage medium is configured to store a computer program for executing the following steps:
S1, acquiring position information and signal strength information of a target position on a moving path of an electric scooter unlocked by a target account, wherein the signal strength information is used for indicating a signal strength of a wireless signal at the target position;
S2, establishing a corresponding relationship between the position information and the signal strength information;
S3, sending the corresponding relationship to a target client logged in by using the target account to display the location information and the signal strength information on the target client.

Optionally, in this embodiment, the above storage medium may include but not limited to: various media capable of storing the computer program such as a USB flash disk, a Read-Only Memory (abbreviated as ROM), a Random Access Memory (abbreviated as RAM), a mobile hard disk, a magnetic disk or an optical disk.

The embodiment of the present disclosure further provide an electronic apparatus, which includes a memory and a processor; the memory stores a computer program; and the processor is configured to run the computer program to execute the steps of the above-mentioned any method embodiment. The electronic apparatus can be used on an electric scooter electric scooter.

In the present embodiment, the processor is configured to run the computer program to execute the following steps:
S1, acquiring position information and signal strength information of a target position on a moving path of an electric scooter unlocked by a target account, wherein the signal strength information is used for indicating a signal strength of a wireless signal at the target position;
S2, establishing a corresponding relationship between the position information and the signal strength information;
S3, sending the corresponding relationship to a target client logged in by using the target account to display the location information and the signal strength information on the target client.

Optionally, the specific examples in this embodiment may be referred to the examples described in the above embodiments and optional implementation manners, and will not be repeated here in this embodiment.

Obviously, those skilled in the art should know that each module or each step of the present disclosure may be implemented by a universal computing device, and the modules or steps may be concentrated on a single computing device or distributed on a network formed by a plurality of computing devices, and may optionally be implemented by program codes executable for the computing devices, so that the modules or steps may be stored in a storage device for execution with the computing devices, the shown or described steps may be executed in sequences different from those described here in some circumstances, or may form each integrated circuit module respectively, or multiple modules or steps therein may form a single integrated circuit module for implementation. Therefore, the present disclosure is not limited to any specific hardware and software combination.

The above is only the optional embodiment of the present disclosure and not intended to limit the scope of protection of the present disclosure. For those skilled in the art, the present disclosure may have various modifications and variations. Any modifications, equivalent replacements, improvements and the like made within the principle of the present disclosure shall fall within the scope of protection of the present disclosure.

## Claims

1. A method for acquiring information, comprising:
acquiring (S102) position information and signal strength information of multiple positions on a moving path of an electric scooter unlocked by a account, wherein the signal strength information is used for indicating a signal strength of a wireless signal at the multiple positions;
establishing (S104) a corresponding relationship between the position information and the signal strength information along the moving path of the electric scooter; and,
sending (S106) the corresponding relationship to a client logged in by using the account to display the location information and the signal strength information on the client;
wherein after sending the corresponding relationship to the client logged in by using the account, the method further comprises:
detecting that signal strength of the wireless signal at a second position where the electric scooter is located is less than a threshold after ending use of the electric scooter through the account;
determining a third position on the movement path according to the established corresponding relationship, wherein signal strength of the wireless signal at the third position is greater than or equal to the threshold; and,
controlling the electric scooter to move from the second position to the third position by a motor of the electric scooter.

2. The method as claimed claim 1, wherein acquiring the position information and the signal strength information of the multiple positions on the moving path of the electric scooter unlocked by the account comprises:
acquiring the position information by using a global positioning service, GPS, system installed on the electric scooter; and,
detecting the signal strength information by using a first wireless communication device mounted on the electric scooter.

3. The method as claimed in claim 1, wherein acquiring the position information and the signal strength information of the multiple positions on the moving path of the electric scooter unlocked by the account comprises:
receiving the position information and the signal strength information of the electric scooter from an electric scooter other than the electric scooter by using a second wireless communication device mounted on the electric scooter.

4. The method as claimed in claim 1, wherein after establishing the corresponding relationship between the position information and the signal strength information, the method further comprises:
saving the established corresponding relationship to the electric scooter.

5. The method as claimed in claim 1, wherein sending the corresponding relationship to the client logged in by using the account comprises:
sending the corresponding relationship to the client logged in by using the account via a server.

6. The method as claimed in claim 1, wherein after sending the corresponding relationship to the client logged in by using the account, the method further comprises:
detecting a operation performed on the electric scooter, wherein the operation is used for locking the electric scooter; and,
in a case that signal strength of the wireless signal at a first position where the electric scooter is located is less than a threshold, sending out prompt information through the electric scooter before locking the electric scooter in response to the operation, wherein the prompt information is used for prompting that the signal strength of the wireless signal at the first position is less than the threshold.

7. An electric scooter, comprising:
an acquiring module (22), configured to acquire position information and signal strength information of multiple positions on a moving path of an electric scooter unlocked by a account, wherein the signal strength information is used for indicating a signal strength of a wireless signal at the multiple positions;
an establishing module (24), configured to establish a corresponding relationship between the position information and the signal strength information along the moving path of the electric scooter; and,
a sending module (26), configured to send the corresponding relationship to a client logged in by using the account to display the location information and the signal strength information on the client;
wherein the electric scooter further comprises:
a second detecting module (42), configured to, after sending the corresponding relationship to the client logged in by using the account, detect that signal strength of the wireless signal at a second position where the electric scooter is located is less than a threshold after ending use of the electric scooter through the account;
a determining module (44), configured to determine a third position on the movement path according to the established corresponding relationship, wherein signal strength of the wireless signal at the third position is greater than or equal to the threshold; and,
a control module (46), configured to control the electric scooter to move from the second position to the third position by a motor of the electric scooter.

8. The electric scooter as claimed in claim 7, wherein the acquiring module comprises:
an acquiring unit, configured to acquire the position information by using a global positioning service, GPS, system installed on the electric scooter; and,
a detecting unit, configured to detect the signal strength information by using a first wireless communication device mounted on the electric scooter.

9. The electric scooter as claimed in claim 7, wherein the acquiring module comprises:
a receiving unit, configured to receive the position information and the signal strength information of the electric scooter from an electric scooter other than the electric scooter by using a second wireless communication device mounted on the electric scooter.

10. The electric scooter as claimed in claim 7, wherein the electric scooter is further configured to, after establishing the corresponding relationship between the position information and the signal strength information, save the established corresponding relationship to the electric scooter.

11. The electric scooter as claimed in claim 7, wherein the electric scooter further comprises:
a first detecting module (32), configured to detect a operation performed on the electric scooter after sending the corresponding relationship to the client logged in by using the account, wherein the operation is used for locking the electric scooter; and,
a prompting module (34), configured to, in a case that signal strength of the wireless signal at a first position where the electric scooter is located is less than a threshold, send out prompt information through the electric scooter before locking the electric scooter in response to the operation, wherein the prompt information is used for prompting that the signal strength of the wireless signal at the first position is less than the threshold.

12. A storage medium, wherein the storage medium stores a computer program which, when executed by a computer, cause the computer to execute the method as claimed in one of claims 1 to 6.

13. An electronic apparatus, wherein the electronic apparatus comprises a memory and a processor, the memory stores a computer program, and the processor is configured to run the computer program to execute the method as claimed in one of claims 1 to 6.

## Patentansprüche

1. Verfahren zum Erfassen von Informationen, umfassend:
Erfassen (S102) von Positionsinformationen und Signalstärkeinformationen von mehreren Positionen auf einem Bewegungspfad eines elektrischen Scooters, der durch ein Benutzerkonto entsperrt ist, wobei die Signalstärkeinformationen zum Anzeigen einer Signalstärke eines drahtlosen Signals an den mehreren Positionen verwendet werden;
Herstellen (S 104) einer entsprechenden Beziehung zwischen den Positionsinformationen und den Signalstärkeinformationen entlang des Bewegungspfades des elektrischen Scooters; und
Senden (S106) der entsprechenden Beziehung an einen unter Verwendung des Benutzerkontos eingeloggten Client, um die Positionsinformationen und die Signalstärkeinformationen auf dem Client anzuzeigen;
wobei nach dem Senden der entsprechenden Beziehung an den unter Verwendung des Benutzerkontos eingeloggten Client das Verfahren ferner Folgendes umfasst:
Erkennen, dass die Signalstärke des drahtlosen Signals an einer zweiten Position, an der der elektrische Scooter lokalisiert ist, geringer ist als ein Schwellenwert, nachdem die Verwendung des elektrischen Scooters durch das Benutzerkonto beendet wurde;
Bestimmen einer dritten Position auf dem Bewegungspfad gemäß der hergestellten entsprechenden Beziehung, wobei die Signalstärke des drahtlosen Signals an der dritten Position größer als der oder gleich dem Schwellenwert ist; und
Steuern des elektrischen Scooters zur Bewegung von der zweiten Position zur dritten Position durch einen Motor des elektrischen Scooters.

2. Verfahren nach Anspruch 1, wobei das Erfassen der Positionsinformationen und der Signalstärkeinformationen der mehreren Positionen auf dem Bewegungspfad des elektrischen Scooters, der durch das Benutzerkonto entsperrt ist, Folgendes umfasst:
Erfassen der Positionsinformationen unter Verwendung eines auf dem elektrischen Scooter installierten GPS-Systems (Global Positioning Service); und
Erkennen der Signalstärkeinformationen unter Verwendung einer ersten drahtlosen Kommunikationsvorrichtung, die auf dem elektrischen Scooter montiert ist.

3. Verfahren nach Anspruch 1, wobei das Erfassen der Positionsinformationen und der Signalstärkeinformationen der mehreren Positionen auf dem Bewegungspfad des elektrischen Scooters, der durch das Benutzerkonto entsperrt ist, Folgendes umfasst:
Empfangen der Positionsinformationen und der Signalstärkeinformationen des elektrischen Scooters von einem anderen elektrischen Scooter als dem elektrischen Scooter unter Verwendung einer zweiten drahtlosen Kommunikationsvorrichtung, die auf dem elektrischen Scooter montiert ist.

4. Verfahren nach Anspruch 1, wobei das Verfahren nach dem Herstellen der entsprechenden Beziehung zwischen den Positionsinformationen und den Signalstärkeinformationen ferner Folgendes umfasst:
Speichern der hergestellten entsprechenden Beziehung in dem elektrischen Scooter.

5. Verfahren nach Anspruch 1, wobei das Senden der entsprechenden Beziehung an den unter Verwendung des Benutzerkontos eingeloggten Client Folgendes umfasst:
Senden der entsprechenden Beziehung an den unter Verwendung des Benutzerkontos eingeloggten Client über einen Server.

6. Verfahren nach Anspruch 1, wobei nach dem Senden der entsprechenden Beziehung an den unter Verwendung des Benutzerkontos eingeloggten Client das Verfahren ferner Folgendes umfasst:
Erkennen einer auf dem elektrischen Scooter durchgeführten Operation, wobei die Operation zum Sperren des elektrischen Scooters verwendet wird; und,
in einem Fall, in dem die Signalstärke des drahtlosen Signals an einer ersten Position, an der der elektrische Scooter lokalisiert ist, geringer als ein Schwellenwert ist, Senden von Auslöseinformationen durch den elektrischen Scooter vor dem Sperren des elektrischen Scooters als Reaktion auf die Operation, wobei die Auslöseinformationen zum Auslösen dessen verwendet werden, dass die Signalstärke des drahtlosen Signals an der ersten Position geringer als der Schwellenwert ist.

7. Elektrischer Scooter, umfassend:
ein Erfassungsmodul (22), das dazu konfiguriert ist, Positionsinformationen und Signalstärkeinformationen von mehreren Positionen auf einem Bewegungspfad eines elektrischen Scooters zu erfassen, der durch ein Benutzerkonto entsperrt ist, wobei die Signalstärkeinformationen zum Anzeigen einer Signalstärke eines drahtlosen Signals an den mehreren Positionen verwendet werden;
ein Herstellungsmodul (24), das dazu konfiguriert ist, eine entsprechende Beziehung zwischen den Positionsinformationen und den Signalstärkeinformationen entlang des Bewegungspfades des elektrischen Scooters herzustellen; und
ein Sendemodul (26), das dazu konfiguriert ist, die entsprechende Beziehung an einen unter Verwendung des Benutzerkontos eingeloggten Client zu senden, um die Positionsinformationen und die Signalstärkeinformationen auf dem Client anzuzeigen;
wobei der elektrische Scooter ferner Folgendes umfasst:
ein zweites Erkennungsmodul (42), das dazu konfiguriert ist, nach dem Senden der entsprechenden Beziehung an den unter Verwendung des Benutzerkontos eingeloggten Client zu erkennen, dass die Signalstärke des drahtlosen Signals an einer zweiten Position, an der der elektrische Scooter lokalisiert ist, geringer ist als ein Schwellenwert, nachdem die Verwendung des elektrischen Scooters durch das Benutzerkonto beendet wurde;
ein Bestimmungsmodul (44), das dazu konfiguriert ist, eine dritte Position auf dem Bewegungspfad gemäß der hergestellten entsprechenden Beziehung zu bestimmen, wobei die Signalstärke des drahtlosen Signals an der dritten Position größer als oder gleich dem Schwellenwert ist; und
ein Steuermodul (46), das dazu konfiguriert ist, den elektrischen Scooter zur Bewegung von der zweiten Position zur dritten Position durch einen Motor des elektrischen Scooters zu steuern.

8. Elektrischer Scooter nach Anspruch 7, wobei das Erfassungsmodul ferner umfasst:
eine Erfassungseinheit, die dazu konfiguriert ist, die Positionsinformationen unter Verwendung eines auf dem elektrischen Scooter installierten GPS-Systems (Global Positioning Service) zu erfassen; und
eine Erkennungseinheit, die dazu konfiguriert ist, die Signalstärkeinformationen unter Verwendung einer ersten drahtlosen Kommunikationsvorrichtung zu erkennen, die auf dem elektrischen Scooter montiert ist.

9. Elektrischer Scooter nach Anspruch 7, wobei das Erfassungsmodul ferner umfasst:
eine Empfangseinheit, die dazu konfiguriert ist, die Positionsinformationen und die Signalstärkeinformationen des elektrischen Scooters von einem anderen elektrischen Scooter als dem elektrischen Scooter unter Verwendung einer zweiten drahtlosen Kommunikationsvorrichtung zu empfangen, die auf dem elektrischen Scooter montiert ist.

10. Elektrischer Scooter nach Anspruch 7, wobei der elektrische Scooter ferner dazu konfiguriert ist, nach der Herstellung der entsprechenden Beziehung zwischen den Positionsinformationen und den Signalstärkeinformationen die hergestellte entsprechende Beziehung in dem elektrischen Scooter zu speichern.

11. Elektrischer Scooter nach Anspruch 7, wobei der elektrische Scooter ferner umfasst:
ein erstes Erkennungsmodul (32), das dazu konfiguriert ist, eine Operation zu erkennen, die auf dem elektrischen Scooter durchgeführt wird, nachdem die entsprechende Beziehung an den durch Verwendung des Benutzerkontos eingeloggten Client gesendet wurde, wobei die Operation zum Sperren des elektrischen Scooters verwendet wird; und
ein Auslösemodul (34), das dazu konfiguriert ist, in einem Fall, in dem die Signalstärke des drahtlosen Signals an einer ersten Position, an der der elektrische Scooter lokalisiert ist, geringer als ein Schwellenwert ist, Auslöseinformationen durch den elektrischen Scooter vor dem Sperren des elektrischen Scooters als Reaktion auf die Operation zu senden, wobei die Auslöseinformationen zum Auslösen dessen verwendet werden, dass die Signalstärke des drahtlosen Signals an der ersten Position geringer als der Schwellenwert ist.

12. Speichermedium, wobei das Speichermedium ein Computerprogramm speichert, das, wenn es von einem Computer ausgeführt wird, den Computer veranlasst, das Verfahren nach einem der Ansprüche 1 bis 6 auszuführen.

13. Elektronisches Gerät, wobei das elektronische Gerät einen Datenspeicher und einen Prozessor umfasst, der Datenspeicher ein Computerprogramm speichert und der Prozessor dazu konfiguriert ist, das Computerprogramm durchzuführen, um das in einem der Ansprüche 1 bis 6 beanspruchte Verfahren auszuführen.

## Revendications

1. Procédé d'acquisition d'informations, comprenant :
l'acquisition (S102) d'informations de position et d'informations d'intensité de signal de multiples positions sur un trajet de déplacement d'une trottinette électrique déverrouillée par un compte, dans lequel les informations d'intensité de signal sont utilisées pour indiquer une intensité de signal d'un signal sans fil aux multiples positions ;
l'établissement (S104) d'une relation correspondante entre les informations de position et les informations d'intensité de signal le long du trajet de déplacement de la trottinette électrique ; et
l'envoi (S 106) de la relation correspondante à un client ayant ouvert une session en utilisant le compte pour afficher les informations de localisation et les informations d'intensité de signal sur le client ;
dans lequel, après l'envoi de la relation correspondante au client ayant ouvert une session en utilisant le compte, le procédé comprend en outre :
la détection que l'intensité de signal du signal sans fil à une deuxième position où se trouve la trottinette électrique est inférieure à un seuil après la fin de l'utilisation de la trottinette électrique par le biais du compte ;
la détermination d'une troisième position sur le trajet de déplacement selon la relation correspondante établie, dans lequel l'intensité de signal du signal sans fil à la troisième position est supérieure ou égale au seuil ; et
la commande de la trottinette électrique pour passer de la deuxième position à la troisième position par un moteur de la trottinette électrique.

2. Procédé selon la revendication 1, dans lequel l'acquisition des informations de position et des informations d'intensité de signal des multiples positions sur le trajet de déplacement de la trottinette électrique déverrouillée par le compte comprend :
l'acquisition des informations de position en utilisant un système de service de positionnement global, GPS, installé sur la trottinette électrique ; et
la détection des informations d'intensité de signal en utilisant un premier dispositif de communication sans fil monté sur la trottinette électrique.

3. Procédé selon la revendication 1, dans lequel l'acquisition des informations de position et des informations d'intensité de signal des multiples positions sur le trajet de déplacement de la trottinette électrique déverrouillée par le compte comprend :
la réception des informations de position et des informations d'intensité de signal de la trottinette électrique à partir d'une trottinette électrique autre que la trottinette électrique en utilisant un second dispositif de communication sans fil monté sur la trottinette électrique.

4. Procédé selon la revendication 1, dans lequel, après avoir établi la relation correspondante entre les informations de position et les informations d'intensité de signal, le procédé comprend en outre :
l'enregistrement de la relation correspondante établie avec la trottinette électrique.

5. Procédé selon la revendication 1, dans lequel l'envoi de la relation correspondante au client ayant ouvert une session en utilisant le compte comprend :
l'envoi de la relation correspondante au client ayant ouvert une session en utilisant le compte par le biais d'un serveur.

6. Procédé selon la revendication 1, dans lequel, après avoir envoyé la relation correspondante au client ayant ouvert une session en utilisant le compte, le procédé comprend en outre :
la détection d'une opération effectuée sur la trottinette électrique, dans lequel l'opération est utilisée pour verrouiller la trottinette électrique ; et
dans un cas où une intensité de signal du signal sans fil à une première position où se trouve la trottinette électrique est inférieure à un seuil, l'envoi d'informations de notification par le biais de la trottinette électrique avant de verrouiller la trottinette électrique en réponse à l'opération, dans lequel les informations de notification sont utilisées pour notifier que l'intensité de signal du signal sans fil à la première position est inférieure au seuil.

7. Trottinette électrique comprenant :
un module d'acquisition (22), configuré pour acquérir des informations de position et des informations d'intensité de signal de multiples positions sur un trajet de déplacement d'une trottinette électrique déverrouillée par un compte, dans laquelle les informations d'intensité de signal sont utilisées pour indiquer une intensité de signal d'un signal sans fil au niveau des multiples positions ;
un module d'établissement (24), configuré pour établir une relation correspondante entre les informations de position et les informations d'intensité de signal le long du trajet de déplacement de la trottinette électrique ; et
un module d'envoi (26), configuré pour envoyer la relation correspondante à un client ayant ouvert une session en utilisant le compte pour afficher les informations de localisation et les informations d'intensité de signal sur le client ;
dans laquelle la trottinette électrique comprend en outre :
un second module de détection (42), configuré pour, après avoir envoyé la relation correspondante au client ayant ouvert une session en utilisant le compte, détecter que l'intensité de signal du signal sans fil à une deuxième position où se trouve la trottinette électrique est inférieure à un seuil après la fin de l'utilisation de la trottinette électrique par le biais du compte ;
un module de détermination (44), configuré pour déterminer une troisième position sur le trajet de déplacement selon la relation correspondante établie, dans laquelle l'intensité de signal du signal sans fil à la troisième position est supérieure ou égale au seuil ; et
un module de commande (46), configuré pour commander la trottinette électrique afin qu'elle se déplace de la deuxième position à la troisième position par un moteur de la trottinette électrique.

8. Trottinette électrique selon la revendication 7, dans laquelle le module d'acquisition comprend :
une unité d'acquisition, configurée pour acquérir les informations de position en utilisant un système de service de positionnement global, GPS, installé sur la trottinette électrique ; et
une unité de détection, configurée pour détecter les informations d'intensité de signal à l'aide d'un premier dispositif de communication sans fil monté sur la trottinette électrique.

9. Trottinette électrique selon la revendication 7, dans laquelle le module d'acquisition comprend :
une unité de réception, configurée pour recevoir les informations de position et les informations d'intensité de signal de la trottinette électrique à partir d'une trottinette électrique autre que la trottinette électrique en utilisant un second dispositif de communication sans fil monté sur la trottinette électrique.

10. Trottinette électrique selon la revendication 7, dans laquelle la trottinette électrique est en outre configurée pour, après avoir établi la relation correspondante entre les informations de position et les informations d'intensité de signal, enregistrer la relation correspondante établie avec la trottinette électrique.

11. Trottinette électrique selon la revendication 7, dans laquelle la trottinette électrique comprend en outre :
un premier module de détection (32), configuré pour détecter une opération effectuée sur la trottinette électrique après l'envoi de la relation correspondante au client ayant ouvert une session en utilisant le compte, dans laquelle l'opération est utilisée pour verrouiller la trottinette électrique ; et
un module de notification (34), configuré pour, dans un cas où l'intensité de signal du signal sans fil à une première position où se trouve la trottinette électrique est inférieure à un seuil, envoyer des informations de notification par le biais de la trottinette électrique avant de verrouiller la trottinette électrique en réponse à l'opération, dans laquelle les informations de notification sont utilisées pour notifier que l'intensité de signal du signal sans fil à la première position est inférieure au seuil.

12. Support de stockage, dans lequel le support de stockage stocke un programme informatique qui, lorsqu'il est exécuté par un ordinateur, amène l'ordinateur à exécuter le procédé selon l'une des revendications 1 à 6.

13. Appareil électronique, dans lequel l'appareil électronique comprend une mémoire et un processeur, la mémoire stocke un programme informatique et le processeur est configuré pour exécuter le programme informatique pour exécuter le procédé selon l'une des revendications 1 à 6.
